# EUROPÄISCHE PATENTSCHRIFT

(11) **EP 1 589 242 B1**
(45) Veröffentlichungstag und Bekanntmachung des Hinweises auf die Patenterteilung: **09.05.2012**
(21) Anmeldenummer: 05005813.0
(22) Anmeldetag: 17.03.2005
(51) Int. Cl.: F16C 33/78, F16J 15/32, F16J 15/16

(54) **Ausrücklager mit einer Begrenzung der Dichtlippenbewegung**
Release bearing provided with a sealing lip and a device limiting the amplitude of its movement
Butée d'embrayage dotée d'un limiteur de mouvement de la lèvre d'étanchéité

(30) Priorität: 02.04.2004 DE 102004016351
(43) Veröffentlichungstag der Anmeldung: 26.10.2005
(73) Patentinhaber: Schaeffler Technologies AG & Co. KG, 91074 Herzogenaurach (DE)
(72) Erfinder: Winkelmann, Ludwig, 91056 Erlangen (DE); Dittmer, Steffen, 91086 Aurachtal (DE); Klöpfer, Bernhard, 91438 Bad Windsheim (DE)

(56) Entgegenhaltungen:
- DE-A1- 10 259 400
- JP-A- 2004 084 858
- JP-A- 2004 092 704
- US-B1- 6 332 718

## Beschreibung

### Gebiet der Erfindung

Die vorliegende Erfindung betrifft eine Abdichtung für ein als Schrägschulterlager ausgebildetes Ausrücklager, das für eine in Kraftfahrzeugen eingesetzte Schalttrennkupplung bestimmt ist. Der Aufbau des Ausrücklagers umfasst einen drehstarr angeordneten inneren Lagerring und einen umlaufenden, äußeren Lagerring sowie zwischen beiden Lagerringen geführte Wälzkörper. Der zur Aufnahme von Wälzkörpern bestimmte kreisringförmige Einbauraum ist mittels beidseitig der Wälzkörper angeordneten Dichtungen abgedichtet, die übereinstimmend an dem umlaufenden äußeren Lagerring lagefixiert sind. Jede Dichtung umfasst eine Dichtscheibe, an die sich ein Dichtlippenschenkel anschließt, welcher mit einer elastischen Dichtlippe in der Einbaulage kraftschlüssig an dem inneren Lagerring abgestützt ist.

### Hintergrund der Erfindung

Zur Abdichtung von Ausrücklagern ist es vorteilhaft, die Dichtung drehstarr an dem umlaufenden Außenring zu befestigten. Dazu bietet es sich an, die Dichtscheibe der Dichtung in eine Ringnut einzupressen. Diese Einbaulage verhindert, dass der Schmierstoff bei umlaufendem Ausrücklager aufgrund der Fliehkraft nicht aus dem Ausrücklager austritt. Ferner ist bei gleicher Dichttlippenreibung und kleinerer Dichtungslaufbahn ein niedrigeres reibmoment zu erwarten. Die einstückig mit dem Dichtlippenschenkel verbundene dynamische Dichtlippe, bildet eine Dichtungslaufbahn mit dem drehstarr angeordneten Innenring. Abdichtungen mit so genannten weichen Dichtlippen, d. h. dynamisch, elastischen Dichtlippen weisen aus Gründen der Reibung und zur Toleranzüberbrückung einen Dichtlippenschenkel auf. Bedingt durch die Fliehkraft verringert sich bei hohen Drehzahlen die Anlage- bzw. Abstützkraft der Dichtlippe. Die reduzierte Anpresskraft der Dichtlippe ist einerseits erwünscht, kann jedoch auch zu einem nachteiligen Abheben der Dichtlippe von der Dichtungslaufbahn, dem Kontaktbereich zu dem inneren Lagerring führen. Ein sich dabei einstellender Ringspalt reduziert die Abdichtfunktion und ermöglicht ein nachteiliges Eindringen von Verunreinigungen in das Ausrücklager, was zu einem vorzeitigen Ausfall führen kann.

Die DE 101 48 388 A1 zeigt eine Ausrücklager-Abdichtung, die eine als Plattendichtung bezeichnete Dichtung umfasst. Ein Blechmantel dieser Abdichtung ist formschlüssig an dem äußeren, umlaufenden Lagerring befestigt, der mit einem radial nach innen gerichteten Schenkel mit Ausnahme des Dichtlippenschenkels, die elastische Dichtung stirnseitig abdeckt. Die sich endseitig an den Dichtlippenschenkel anschließende elastische, bzw. dynamische Dichtlippe der Abdichtung stützt sich auf einer zylindrischen Mantelfläche des inneren, drehstarr angeordneten Lagerrings dichtend ab. Im Betriebszustand, d. h. bei umlaufender Schalttrennkupplung verlagert sich fliehkraftbedingt der Dichtlippenschenkel, wodurch sich die Abstützkraft des freien Endes der Dichtlippe reduziert, und sich ein Ringspalt zwischen der Dichtlippe und dem inneren Lagerring einstellt.

Die US 6,332,718 B1 zeigt ein Wälzkugellager mit einem Innenringer, einem Außenring und dazwischen gelagerten Wälzkörpern, bei dem beidseitige Wälzkörperdichtungen angeordnet sind, mit einer Dichtscheibe, an der sich ein Dichtlippenschenkel anschließt, deren dynamische Dichtlippe dem inneren Dichtring zugeordnet ist, wobei zwischen Dichtscheibe und Dichtlippe entlang des Dichtlippenschenkels ein Ringspalt ausgebildet ist.

Die JP 2004 084 858 zeigt ein Dichtungsanordnung bei einem Wälzlager, bei der im Ringspalt zwischen Dichtscheibe und Dichtlippe ein umlaufender Dichtungswulst zur Dichtlippenverstärkung vorgesehen ist.

Die JP 2004 092 74 zeigt ein Wälzlager mit einer Dichtungsanordnung, bei der im Dichtlippenschenkel zwischen Dichtscheibe und Dichtlippe Rippen angeordnet sind, die zur Erhöhung bzw. Beigehaltung der Vorspannung im Betrieb die Dichtlippe gegen die Dichtscheibe versteifen.

### Zusammenfassung der Erfindung

Die Aufgabe der vorliegenden Erfindung besteht darin, eine Stellbewegung der dynamischen Dichtlippe im Betriebszustand zu begrenzen, um unabhängig von der Umlaufdrehzahl der Schalttrennkupplung stets eine ausreichende Dichtwirkung zu erzielen.

Diese Problemstellung wird erfindungsgemäß durch die Merkmale von Anspruch 1 gelöst. Als Abdichtung ist eine Dichtung vorgesehen, wobei der Dichtlippenschenkelp einen maximalen axialen Versatz zwischen einer Kontaktlinie der Dichtlippe an dem inneren Lagerring und einem Gelenkpunkt der Dichtscheibe vorsieht. Weiterhin schließt die Erfindung in einem radial von der Dichtscheibe der Dichtung und der Dichtlippe begrenzten Ringspalt Maßnahmen ein, die eine fliehkraftbedingte Stellbewegung der elastischen, dynamischen Dichtlippe begrenzen. Rippen oder Nocken sind dazu vorgesehen, die einstückig mit der Dichtlippe oder der Dichtscheibe in Verbindung stehen, und die einen Anschlag für die dynamische Dichtlippe darstellen.

Die erfindungsgemäße Maßnahme, welche gezielt Rippen oder Nocken in dem Ringspalt zwischen der dynamischen Dichtlippe einerseits und der Dichtscheibe andererseits vorsieht, vermeidet das Abheben der Dichtlippe von der Dichtungslaufbahn bzw. der Kontaktlinie zu dem inneren Lagerring. Durch die Nocken oder die Rippen wird erfindungsgemäß vielmehr eine definierte Entlastung der Dichtlippen-Abstützkraft gewährleistet, ohne ein nachteiliges, die Dichtwirkung aufhebendes Abheben der Dichtlippe. Aufgrund der Fliehkraftwirkung in Verbindung mit den erfindungsgemäßen Maßnahmen stellt sich bei hohen Drehzahlen des Ausrücklagers eine verringerte Dichtungsreibung ein, verbunden mit einer reduzierten Lagererwärmung. Das begrenzte Aufweiten der elastischen Dichtlippe auf ein Maß, dass ein nachteiliges Eintreten von Verunreinigungen in das Ausrücklager wirksam unterbunden wird, verbessert die Lebensdauer des Ausrücklagers und damit die Funktion der Schalttrennkupplung. Dabei stellen die einstückig an der Dichtlippe oder der Dichtscheibe der Dichtung angeformten Rippen oder Nocken eine einfache, kostengünstige Maßnahme dar, die weiterhin keinen nachteiligen Einfluss auf die Einbaulage sowie auf weitere Bauteile des Ausrücklagers ausüben.

Weitere vorteilhafte Ausgestaltungen sind Gegenstand der abhängigen Ansprüche 2 bis 7.

Eine bevorzugte Ausgestaltung der Erfindung sieht vor, die Dichtlippe an dem freien Schenkel des Dichtlippenschenkels außenseitig, d. h. auf der von der Kontaktlinie abgewandten Außenseite mit symmetrisch umfangsverteilt angeordneten Nocken zu versehen. In einer fliehkraftbedingten Endlage stützen sich diese Nocken unmittelbar an der Dichtscheibe der Dichtung ab.

Alternativ schließt die Erfindung eine Dichtung ein, deren Dichtscheibe einstückig mit radial nach innen ausgerichteten Rippen versehen ist. Die Rippen bilden damit einen Endanschlag für die Dichtlippe, deren Abstützkraft an der Kontaktlinie sich bei hohen Drehzahlen verringert. Die maßliche Auslegung der Rippen erfolgt so, dass die Dichtlippe fliehkraftbedingt nicht von dem inneren Lagerring abhebt.

Die Dichtung, deren Dichtlippe außenseitig Nocken aufweist, vergrößert die Masse der Dichtlippe, wobei die im Massenschwerpunkt angreifende Fliehkraft eine nach außen wirkende Kraftkomponente auslöst. Abhängig von der Einbaulage der Abdichtung stellt sich eine im Uhrzeigersinn oder im Gegenuhrzeigersinn wirkende Kraftkomponente ein. Diese Wirkungsweise begünstigt die gewünschte mit zunehmender Drehzahl reduzierte Kontaktpressung zwischen der Dichtlippe und dem drehstarr angeordneten inneren Lagerring im Bereich einer Kontaktlinie bzw. Kontaktfläche. Durch die Nockenhöhe kann die Stellbewegung der Dichtlippe unmittelbar beeinflusst werden, wodurch ein nachteiliges unkontrolliertes Abheben der Dichtlippe unterbleibt.

Durch Versuche kann eine Dimensionierung der Dichtlippen in Verbindung mit den zugehörigen Nocken oder Rippen bestimmt werden, bei der in festgelegten Drehzahlbereichen des Ausrücklagers keine bzw. eine äußerst geringe Kontaktpressung zwischen den Dichtlippen und dem inneren Lagerring entsteht. Beispielsweise kann die Dichtlippe so gestaltet werden, dass für ein Drehzahlniveau > 5.000 Umdrehungen/ Minute die Dichtlippe nahezu kontaktlos an der Mantelfläche des inneren Lagerrings anliegt.

Eine bevorzugte Auslegung der erfindungsgemäßen Dichtung sieht vor, dass im Einbauzustand, bei ruhendem Ausrücklager sich ein Spaltmaß von ≥ 0,2 mm zwischen dem Nocken und der Dichtscheibe oder der Dichtlippe und der mit der Dichtscheibe in Verbindung stehenden Rippe einstellt. Dieses Maß berücksichtigt alle Bauteil- bzw. Einbautoleranzen und gewährt andererseits eine gewünschte Entlastung der Dichtlippe im Kontaktbereich bei umlaufenden Ausrücklager, d.h. verringerte Kontaktpressung, welche zu einer nachteiligen Erwärmung des Ausrücklagers führt.

Als Maßnahme, einen nachteiligen Überdruckzustand in dem Ausrücklager auszugleichen, bzw. einen Ausgleich von Druckdifferenzen zwischen dem Innenraum des Ausrücklagers und der äußeren Umgebung zu gewährleisten, weist die Dichtlippe im Kontaktbereich mit dem inneren Lagerring eine Entlüftungsnut auf. Die Dimensionierung der geradlinig oder schraubenlinienartig ausgerichteten Entlüftungsnut erfolgt so, dass ein Eintritt von Verunreinigungen und gleichzeitig einen Schmierstoffaustritt aus dem Ausrücklager vermieden wird. Bedarfsabhängig schließt die Erfindung weiterhin die Anordnung von mehreren umfangsverteilt angeordneten Entlüftungsnuten ein.

Zur Erzielung einer hohen Elastizität der dynamischen Dichtlippe erstreckt sich der Dichtlippenschenkel vorteilhaft über die gesamte Breite der Dichtung. Eine bevorzugte Einbaulage der Abdichtung sieht vor, den Gelenkpunkt der Dichtlippe sowie die Kontaktlinie der Dichtlippe jeweils endseitig des Dichtlippenschenkels anzuordnen. Diese Gestaltung des Dichtlippenschenkels gewährleistet eine optimale Anpassung der Dichtlippe an den inneren drehstarren Lagerring sowie eine ausreichenden Bauraum für eine optimale Anordnung der Nocken auf der Außenseite der Dichtlippe oder der Rippen an der Dichtscheibe.

### Kurze Beschreibung der Zeichnungen

Ein Ausführungsbeispiel der Erfindung ist in der Figur dargestellt. Sie zeigt:

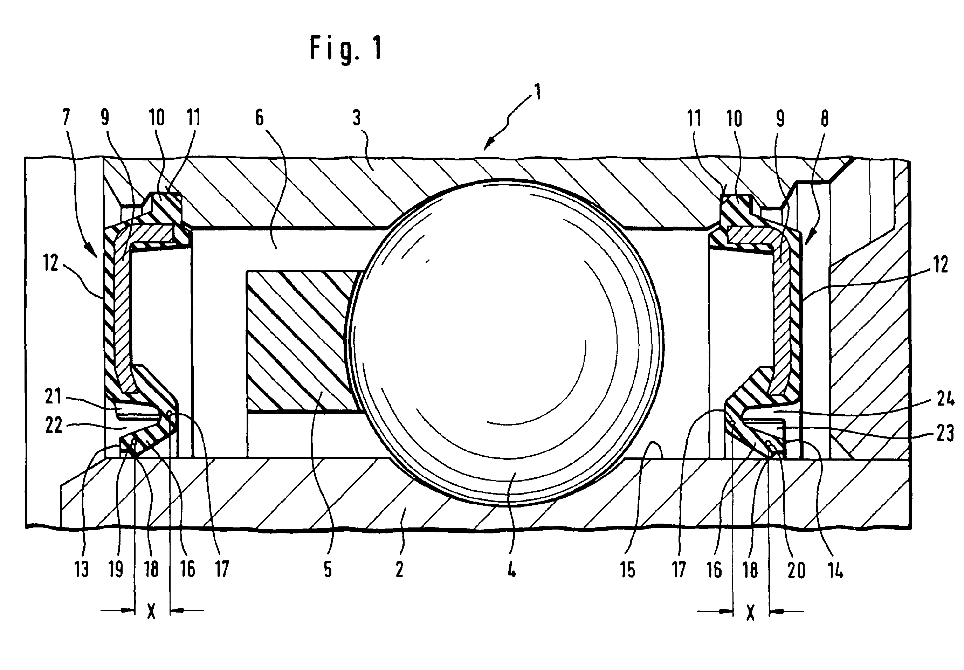

- Figur 1: den Aufbau eines Ausrücklagers, versehen mit zwei abweichend voneinander gestalteten Abdichtungen;

### Ausführliche Beschreibung der Zeichnungen

Das Ausrücklager 1 gemäß Figur 1 umfasst einen drehstarr angeordneten, inneren Lagerring 2 sowie einen umlaufenden äußeren Lagerring 3. Das Ausrücklager 1 bildet einen kreisringförmig gestalteten Einbauraum 6, in dem die Wälzkörper 4 angeordnet sind und der seitlich, axial beabstandet zu den Wälzkörpern Abdichtungen einschließt. Dazu sind Dichtungen 7, 8 vorgesehen, die jeweils eine als Winkelblech ausgebildete Armierung 9 aufweisen, die zumindest einseitig von einem elastischen Dichtwerkstoff der Dichtung 7, 8 umschlossen sind. Beide Dichtungen 7, 8 sind an dem äußeren Lagerring 3 lagefixiert. Dazu ist der kurze Schenkel der Armierung 9 von einer aus dem Dichtwerkstoff geformten Wulst 10 umschlossen, die kraftschlüssig in eine Ringnut 11 des äußeren Lagerrings 3 eingepresst ist. Die Dichtung 7, 8 bildet weiterhin eine radial ausgerichtete Dichtscheibe 12, an der sich innenseitig eine Dichtlippe 13, 14 anschließt, welche in der Einbaulage an einer Mantelfläche 15 des inneren Lagerrings 2 abgestützt ist.

Übereinstimmend weisen die Dichtlippen 13, 14 einen Dichtlippenschenkel 16 auf, der sich von einem elastischen Gelenkpunkt 17 nahezu bis über die gesamte Breite der Dichtung 7, 8 erstreckt. Von dem Gelenkpunkt 17 ausgehend, Wälzkörpern Abdichtungen einschließt. Dazu sind Dichtungen 7, 8 vorgesehen, die jeweils eine als Winkelblech ausgebildete Armierung 9 aufweisen, die zumindest einseitig von einem elastischen Dichtwerkstoff der Dichtung 7, 8 umschlossen sind. Beide Dichtungen 7, 8 sind an dem äußeren Lagerring 3 lagefixiert. Dazu ist der kurze Schenkel der Armierung 9 von einer aus dem Dichtwerkstoff geformten Wulst 10 umschlossen, die kraftschlüssig in eine Ringnut 11 des äußeren Lagerrings 3 eingepresst ist. Die Dichtung 7, 8 bildet weiterhin eine radial ausgerichtete Dichtscheibe 12, an der sich innenseitig eine Dichtlippe 13, 14 anschließt, welche in der Einbaulage an einer Mantelfläche 15 des inneren Lagerrings 2 abgestützt ist.

Übereinstimmend weisen die Dichtlippen 13, 14 einen Dichtlippenschenkel 16 auf, der sich von einem elastischen Gelenkpunkt 17 nahezu bis über die gesamte Breite der Dichtung 7, 8 erstreckt. Von dem Gelenkpunkt 17 ausgehend, verläuft die Dichtlippe 13, 14 geneigt zu der Kontaktlinie 18 an dem inneren Lagerring 2. Im Betriebszustand rotiert die Dichtung 7, 8 mit dem umlaufenden äußeren Lagerring 3. Fliehkraftbedingt stellt sich dabei eine in Abhängigkeit von der Einbaulage eine im Uhrzeigersinn (F₁) oder im Gegenuhrzeigersinn (F₂) wirkende Kraftkomponente ein, die dazu führt, dass sich die Abstützkraft der Dichtlippe 13, 14 an dem inneren Lagerring 2 reduziert.

Als Maßnahme zur Vermeidung einer unkontrollierten Stellbewegung, bzw. einem nachteiligen Abheben der Dichtlippe 13, 14 von dem Lagerring 2 ist die Dichtung 7 mit mehreren umfangsverteilt angeordneten, einstückig mit der Dichtscheibe 12 verbundenen Rippen 21 versehen. Die Rippen 21 sind so gestaltet, dass sich ein Ringspalt 22 gegenüber der Außenkontur der Dichtlippe 13 einstellt und damit eine fliehkraftbedingte Stellbewegung der Dichtlippe 13 im Uhrzeigersinn begrenzt. Alternativ weist die Dichtung 8 zur Erzielung einer begrenzten Stellbewegung einstückig mit der Dichtlippe 14 in Verbindung stehende Nocken 23 auf. Die umfangsverteilt einstückig mit der Dichtlippe 14 verbundenen Nocken 23 sind bis auf den Ringspalt 24 an die Kontur der Dichtscheibe 12 geführt und begrenzen damit eine fliehkraftbedingte Stellbewegung im Gegenuhrzeigersinn der Dichtlippe 14.

### Bezugszahlen

- 1: Ausrücklager
- 2: Lagerring (innen)
- 3: Lagerring (außen)
- 4: Wälzkörper
- 5: Käfig
- 6: Einbauraum
- 7: Dichtung
- 8: Dichtung
- 9: Armierung
- 10: Wulst
- 11: Ringnut
- 12: Dichtscheibe
- 13: Dichtlippe
- 14: Dichtlippe
- 15: Mantelfläche
- 16: Dichtlippenschenkel
- 17: Gelenkpunkt
- 18: Kontaktlinie
- 19: Massenschwerpunkt
- 20: Massenschwerpunkt
- 21: Rippe
- 22: Ringspalt
- 23: Nocken
- 24: Ringspalt
- 25: Wulst
- 26: Wulst
- 27: Entlüftungsnut

## Patentansprüche

1. Abdichtung für ein Ausrücklager (1), das für eine in Kraftfahrzeugen eingesetzte Schalttrennkupplung bestimmt ist und einen drehstarr angeordneten inneren Lagerring (2) und einen umlaufenden äußeren Lagerring (3) umfasst, sowie zwischen beiden Lagerringen (2, 3) geführte Wälzkörper (4), die in einem kreisringförmigen, mittels beidseitig der Wälzkörper (4) angeordneten Dichtungen (7, 8) abgedichteten Einbauraum (6) angeordnet sind, wobei die vorzugsweise an dem umlaufenden äußeren Lagerring (3) befestigte Dichtung (7, 8) eine Dichtscheibe (12) bildet, an der sich ein Dichtlippenschenkel (16) anschließt, deren dynamische Dichtlippe (13, 14) dem inneren Lagerring (2) zugeordnet ist, *und wobei* der Dichtlippenschenkel (16) einen axialen Versatz "X" zwischen einer Kontaktlinie (18) der Dichtlippe (13, 14) mit dem inneren Lagerring (2) und einem Gelenkpunkt (17) der Dichtscheibe (12) aufweist und in einem Ringspalt (22, 24), der radial von der Dichtscheibe (12) der Dichtung (7, 8) und der Dichtlippe (13, 14) begrenzt ist, Rippen (21) oder Nocken (23) eine fliehkraftbedingte, nach außen gerichtete Stellbewegung der Dichtlippe (13, 14) begrenzen, **dadurch gekennzeichnet, dass** in dem Ringspalt (22, 24) zwischen jedem Nocken (23) und der Dichtscheibe (12) oder der Dichtlippe (13) und jeder Rippe in der Einbaulage im Ruhezustand ein Spaltmaß vorgesehen ist.

2. Abdichtung nach Anspruch 1, bei dem die Dichtlippe (13, 14) der Dichtung (7, 8) auf der von der Kontaktlinie (18) abgewandten äußeren Seite umfangsverteilt angeordnete Nocken (23) einschließt, die sich in einer Endlage der Dichtlippe (14) an der Dichtscheibe (12) abstützen.

3. Abdichtung nach Anspruch 1, deren Dichtung (7) einstückig mit der Dichtscheibe (12) verbundene, radial nach innen ausgerichtete Rippen (21) aufweist, die mit der Dichtlippe (13) zusammenwirken.

4. Abdichtung nach Anspruch 2, wobei eine in einem Massenschwerpunkt (19, 20) der Dichtlippe (13,14) angreifende Fliehkraft, abhängig von der Einbaulage eine im Uhrzeigersinn oder im Gegenuhrzeigersinn wirkende Kraftkomponente auslöst.

5. Abdichtung nach Anspruch 1, bei dem ein Spaltmaß von ≥ 0,2 mm zwischen dem Nocken (23) und der Dichtscheibe (12) oder der Dichtlippe (13) und der Rippe (21) im der Einbaulage im Ruhezustand vorgesehen ist.

6. Abdichtung nach Anspruch 1, mit einer Dichtung (7, 8), deren Dichtlippe (13, 14) im Bereich der Kontaktlinie (18) zumindest eine Entlüftungsnut (27) einschließt.

7. Abdichtung nach Anspruch 1, wobei der Dichtlippenschenkel (16) der Dichtung (7, 8) sich nahezu über die gesamte Breite der Dichtung (7, 8) erstreckt, und der Gelenkpunkt (17) sowie die Kontaktlinie (18) der Dichtlippe (13, 14) zur Erzielung einer vergrößerten Elastizität jeweils endseitig des Dichtlippenschenkels (16) angeordnet sind.

## Claims

1. Sealing means for a release bearing (1) which is intended for a disengaging clutch used in motor vehicles and comprises an inner bearing ring (2) arranged so as not to rotate, a circulating outer bearing ring (3), and rolling bodies (4) which are guided between the two bearing rings (2, 3) and are arranged in a circularly annular installation space (6) which is sealed by means of seals (7, 8) which are arranged on both sides of the rolling bodies (4), the seal (7, 8) which is preferably fastened to the circulating outer bearing ring (3) forming a sealing washer (12) which is adjoined by a sealing-lip limb (16), the dynamic sealing lip (13, 14) of which is assigned to the inner bearing ring (2), and the sealing-lip limb (16) having an axial offset "X" between a contact line (18) of the sealing lip (13, 14) with the inner bearing ring (2) and an articulation point (17) of the sealing washer (12), and ribs (21) or cams (23) limiting an outwardly directed actuating movement of the sealing lip (13, 14) caused by centrifugal force in an annular gap (22, 24) which is delimited radially by the sealing washer (12) of the seal (7, 8) and the sealing lip (13, 14), **characterized in that** a clearance is provided in the rest state in the annular gap (22, 24) between each cam (23) and the sealing washer (12) or the sealing lip (13) and each rib in the installed position.

2. Sealing means according to Claim 1, in which the sealing lip (13, 14) of the seal (7, 8) encloses cams (23) which are arranged distributed over the circumference on the outer side which faces away from the contact line (18) and are supported on the sealing washer (12) in an end position of the sealing lip (14).

3. Sealing means according to Claim 1, the seal (7) of which has ribs (21) which are connected integrally to the sealing washer (12), are oriented radially to the inside and interact with the sealing lip (13).

4. Sealing means according to Claim 2, a centrifugal force which acts at a centre of mass (19, 20) of the sealing lip (13, 14) triggering a force component which acts in the clockwise direction or in the anticlockwise direction depending on the installed position.

5. Sealing means according to Claim 1, in which a clearance of ≥ 0.2 mm is provided in the rest state between the cam (23) and the sealing washer (12) or the sealing lip (13) and the rib (21) in the installed position.

6. Sealing means according to Claim 1, having a seal (7, 8), the sealing lip (13, 14) of which encloses at least one ventilating groove (27) in the region of the contact line (18).

7. Sealing means according to Claim 1, the sealing-lip limb (16) of the seal (7, 8) extending virtually over the entire width of the seal (7, 8), and the articulation point (17) and the contact line (18) of the sealing lip (13, 14) being arranged in each case on the end side of the sealing-lip limb (16) in order to achieve increased elasticity.

## Revendications

1. Système d'étanchéité pour une butée d'embrayage (1), qui est destinée à un embrayage de séparation utilisé dans des véhicules automobiles et qui comprend une bague de palier intérieure en position calée en rotation (2) et une bague de palier extérieure tournante (3), ainsi que des corps de roulement (4) guidés entre les deux bagues (2, 3), qui sont disposés dans une chambre de montage annulaire (6) étanche au moyen de joints d'étanchéité (7, 8) disposés de part et d'autre des corps de roulement (4), dans lequel le joint d'étanchéité (7, 8) fixé de préférence sur la bague de palier extérieure tournante (3) forme une rondelle d'étanchéité (12), à laquelle se raccorde une branche de lèvre d'étanchéité (16) dont la lèvre d'étanchéité dynamique (13, 14) est associée à la bague de palier intérieure (2), et dans lequel la branche de lèvre d'étanchéité (16) présente un décalage axial "X" entre une ligne de contact (18) de la lèvre d'étanchéité (13, 14) avec la bague de palier intérieure (2) et un point d'articulation (17) de la rondelle d'étanchéité (12) et dans une fente annulaire (22, 24), qui est limitée radialement par la rondelle d'étanchéité (12) du joint d'étanchéité (7, 8) et la lèvre d'étanchéité (13, 14), des nervures (21) ou des ergots (23) limitent une course orientée vers l'extérieur et due à la force centrifuge de la lèvre d'étanchéité (13, 14), **caractérisé en ce qu'**il est prévu dans la fente annulaire (22, 24), entre chaque ergot (23) et la rondelle d'étanchéité (12) ou la lèvre d'étanchéité (13) et chaque nervure, une dimension de fente dans la position de montage à l'état de repos.

2. Système d'étanchéité selon la revendication 1, dans lequel la lèvre d'étanchéité (13, 14) du joint d'étanchéité (7, 8) comprend des ergots (23) disposés de façon répartie en périphérie sur le côté extérieur situé à l'opposé de la ligne de contact (18), qui s'appuient sur la rondelle d'étanchéité (12) dans une position d'extrémité de la lèvre d'étanchéité (14).

3. Système d'étanchéité selon la revendication 1, dont le joint d'étanchéité (7) présente des nervures (21) orientées radialement vers l'intérieur et reliées d'une seule pièce à la rondelle d'étanchéité (12), qui coopèrent avec la lèvre d'étanchéité (13).

4. Système d'étanchéité selon la revendication 2, dans lequel une force centrifuge agissant en un centre de gravité massique (19, 20) de la lèvre d'étanchéité (13, 14), génère une composante de force agissant dans le sens horaire ou dans le sens anti-horaire en fonction de la position de montage.

5. Système d'étanchéité selon la revendication 1, dans lequel il est prévu une dimension de fente de ≥ 0,2 mm entre les ergots (23) et la rondelle d'étanchéité (12) ou la lèvre d'étanchéité (13) et la nervure (21) dans la position de montage à l'état de repos.

6. Système d'étanchéité selon la revendication 1, avec un joint d'étanchéité (7, 8), dont la lèvre d'étanchéité (13, 14) comprend au moins une rainure d'échappement d'air (27) dans la région de la ligne de contact (18).

7. Système d'étanchéité selon la revendication 1, dans lequel la branche de lèvre d'étanchéité (16) du joint d'étanchéité (7, 8) s'étend presque sur toute la largeur du joint d'étanchéité (7, 8), et le point d'articulation (17) ainsi que la ligne de contact (18) de la lèvre d'étanchéité (13, 14) sont disposés chaque fois du côté de l'extrémité de la branche de lèvre d'étanchéité (16) afin d'obtenir une élasticité accrue.
